# EUROPEAN PATENT APPLICATION

(11) **EP 4 231 202 A1**
(43) Date of publication of application: **23.08.2023**
(21) Application number: 23157258.7
(22) Date of filing: 17.02.2023
(51) Int. Cl.: G06N 3/045, G06N 3/0455, G06N 3/092, G06N 5/022

(54) **APPARATUS AND METHOD OF DATA PROCESSING**

(30) Priority: 18.02.2022 GB 202202187
(71) Applicant: Impulse Innovations Limited, London W14 OQL (GB)
(72) Inventor: Chockler, Hana, London, W14 OQL (GB); McNamee, Daniel, London, W14 OQL (GB); Lawrence, Andrew, London, W14 OQL (GB); Kleinegesse, Steven, London, W14 OQL (GB); Sipos, Maksim, London, W14 OQL (GB)
(74) Representative: Basck Limited

(57) **Abstract**

A data processing apparatus comprises at least one processor configured to execute an input module to receive an input dataset comprising a plurality of samples, each assigned to one of a plurality of variables, an encoder module to map the input dataset to a latent representation, a decoder module to process the latent representation and indicate a link category for each pair of variables, wherein the link category is selected from a set of categories including 'no causal link', 'causally linked' and 'unknown', and a reinforcement learning, RL, module to: (i) compare the link category for each pair of variables with the samples for the associated variables, (ii) generate a score function including an error term based on a result of the comparison, and (iii) update one or more parameters of the encoder module and decoder module based on the score function.

## Description

### FIELD OF THE INVENTION

This invention relates in general to the field of data processing, and, in particular, to the processing of data to discover causal structure in an input dataset.

### BACKGROUND OF THE INVENTION

Statistical models are widely used to generate predictive outputs. In particular, learning algorithms that can be trained using established machine learning techniques can be used to generate valuable predictive outputs. Accurate and robust predictions are particularly significant in the fields of Finance, Internet of Things, Energy and Telecoms.

However, the dramatic increase in data availability comes with significant challenges obstructing our ability to transform these data into effective real-world contributions. A key challenge is that these data collectively form a massive, heterogeneous, unsupervised, incomplete, and ever-increasing datastream. Practical applications typically require a model representative of the system impacting critical variables of interest which can then be leveraged for various tasks such as prediction, recommendation, and simulation.

It is beneficial for such models to reflect the true underlying causal mechanisms in the system of interest in order to avoid the well-documented and damaging predictions of correlation-based machine learning methods. These methods tend to generalise poorly as spurious correlations observed in the training set may not be present out-of-sample. These objectives would be met by a foundation model for causal discovery which generates causal structures from arbitrary input data that can then be further utilised in downstream tasks.

The space of all possible causal graphs is super-exponential in the number of variables and is thus too large to search exhaustively. Existing methods are currently limited to only a few variables or require special settings and, therefore, more sophisticated methods are necessary for guiding causal discovery.

The present invention aims to address these problems in the state of the art.

### SUMMARY OF THE INVENTION

According to a first aspect of the present invention, there is provided a data processing apparatus according to claim 1.

According to a second aspect of the present invention, there is provided a data processing method according to claim 14.

According to a third aspect of the present invention, there is provided a computer-readable medium according to claim 15.

Optional features are as set out in the dependent claims.

### BRIEF DESCRIPTION OF THE DRAWINGS.

For a better understanding of the present invention and to show more clearly how it may be carried into effect, reference will now be made by way of example only, to the accompanying drawings, in which:
Figure 1 is a schematic diagram showing a data processing apparatus according to an embodiment;
Figure 2 is a schematic diagram showing a transformer encoder according to an embodiment;
Figure 3 is a schematic diagram showing a Kolmogorov-Arnold encoder according to an embodiment;
Figure 4 is an illustration showing the generation of causal links from an input dataset, according to an embodiment;
Figure 5 is an illustration showing a process of network optimisation with reinforcement learning according to an embodiment; and
Figure 6 is a flowchart showing a data processing method according to an embodiment.

### DETAILED DESCRIPTION OF THE INVENTION

The present invention relates to a data processing apparatus and method. In particular, an input dataset is processed using reinforcement learning to identify causal links in the input dataset.

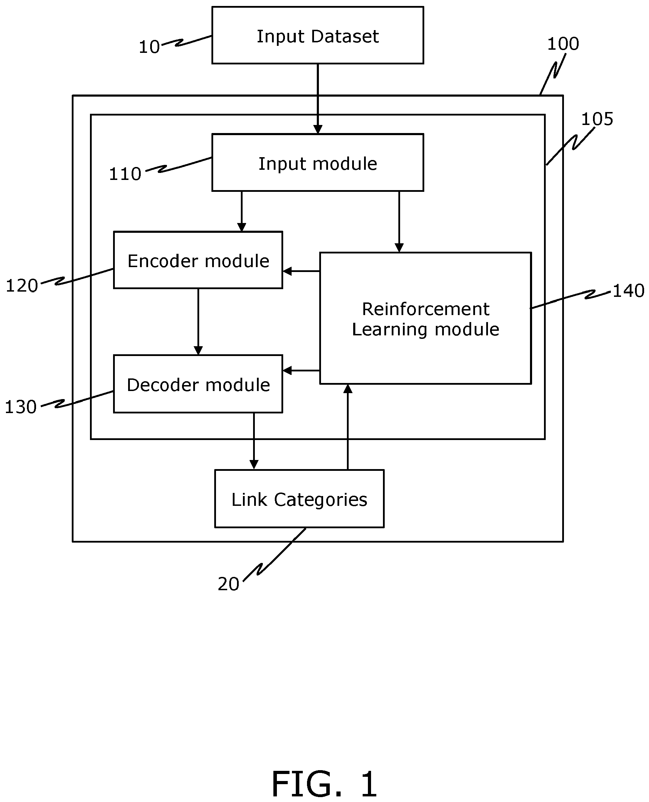

Figure 1 of the accompanying drawings shows a schematic diagram of an embodiment of a data processing apparatus 100 according to the present invention. The data processing apparatus 100 comprises at least one processor 105. The at least one processor 105 is configured to execute an input module 110, an encoder module 120, a decoder module 130 and a reinforcement learning module 140.

The technical contribution of the present disclosure is to provide a specialized data processing apparatus, such as the data processing apparatus 100, to enable causal discovery for the input dataset 10 that is too complex to study and has a significantly large dimensionality. Thus, the technical effect provided by the data processing apparatus 100 is that complex information present in the input dataset 10 is converted into a simplified form of latent representation having low dimensionality in comparison to the input dataset 10, that reduces a processing burden on the at least one processor 105 and enables the at least one processor 105 to indicate causal links between the each pair of variables in an efficient and rapid manner which is impossible to be done by any human. Beneficially, this technical effect enables a user to draw inferences and information from the indicated causal links between given pairs of variables, where the given pairs of variables correspond to certain parameters that affect a working of a given industry. Thus, advantageously, based on the inferences and information that is drawn, the given industry is able to make changes to areas such as manufacturing, supply chain, logistics, marketing, research and development, and the like, to improve parameters such as productivity, manufacturing costs, and the like.

The term "*processor*" 105 refers to the hardware, software, firmware or a combination of these, suitable for controlling the operation of the data processing apparatus 100. In particular, the at least one processor 105 is communicably coupled to other components of the data processing apparatus 100. In some implementations, the at least one processor 105 is implemented in at least one computing device of the data processing apparatus 100. It will be appreciated that the term "at least one processor" 105 refers to "one processor" in some implementations, and "a plurality of processors" in other implementations. Optionally, the at least one processor 105 is implemented as at least one Central Processing Unit (CPU). Alternatively, the at least one processor 105 is implemented as at least one Graphics Processing Unit (GPU).

The input module 110 is configured to receive an input dataset 10 comprising a plurality of samples. Optionally, the input module 110 may be implemented in an input device coupled to the at least one processor 105, where the at least one processor 105 is able to execute the input module 110 (i.e. to activate the input device, or to control the input device, or similar) to receive the input dataset 10. Each of the samples is assigned to one of a plurality of variables. For example, one or more of the variables may include time-series data comprising a plurality of samples each associated with a time point. Alternatively, or in addition, the variables may include tabular data and/or one or more independent and identically distributed (IID) variables. In some examples, the input dataset 10 may include any number up to several thousand variables or more. In some examples, the input dataset 10 may further include variables with text data points, for example, categorical data, and/or contextual information in the form of ontological variable labels.

In some examples, the input dataset 10 may be a subset of a larger raw dataset, where the input dataset 10 is generated by identifying one or more potentially useful variables in the raw dataset. In some examples, the input dataset 10, or the raw dataset, may be generated by 'crawling' one or more publicly or privately available data sources.

The encoder module 120 is configured to map the input dataset 10 to a latent representation. Optionally, the encoder module 120 may be implemented in an encoder. Optionally, the encoder is a device which may be coupled to the at least one processor 105 or may be coupled to a part of the at least one processor 105. Alternatively, the encoder may be a part of the at least one processor 105. Herein, the term "*latent representation*" refers to a way of representing the input dataset 10 by passing it through a machine learning model, such as a neural network whose output has a lower dimension than its input, that reduces the dataset's dimensionality (i.e. the number of variables present in the dataset) while retaining the information present in the input dataset 10. Notably, the latent representation captures most significant features or patterns in the input dataset 10 and is used as a compressed form of original data that is present in the input dataset 10. Notably, in the input dataset 10, data mostly lies close to a manifold of a much lower dimensionality than an original dimensionality of the input dataset 10. For example, for a given dataset with a dimensionality of 20, an intrinsic dimensionality of the given dataset is much smaller. Subsequently, the process of mapping the input dataset 10 to the latent representation is performed by the encoder module 120 using a statistical model, such as a neural network. For example, if the dimensionality of the input dataset 10 is D (i.e. D number of variables are present in the input dataset 10), then the input dataset 10 is mapped to the latent representation of the dimensionality Q (i.e. Q number of variables are present in the latent representation), where the value of Q is less than D. Thus, beneficially, the encoder module 120 is able to map the input dataset 10 of any possible dimensionality to the latent representation, and the input dataset 10 is simplified for a better generalization from a perspective of causal discovery. The dimensionality of the input dataset 10 may be, for example, a number of time points for the plurality of variables. The encoder may be configured to map a first vector representing each variable, where the first vector has a first dimensionality, to a second in a vector space having a second dimensionality lower than the first dimensionality.

In some examples, the encoder module 120 may be selected based on the type of data in the input dataset 10. The encoder module 120 may be a generic or modular encoder. That is, the encoder module 120 may be selected from one or more known encoders suitable for the type of data in the input dataset 10. In this way, input data of any type can be processed. In some examples, the encoder module 120 may be pre-trained on another dataset, or may be a new, untrained module, e.g. initialised with random or pre-set parameters.

In some embodiments, the encoder module 120 may include a transformer unit configured to generate embeddings.

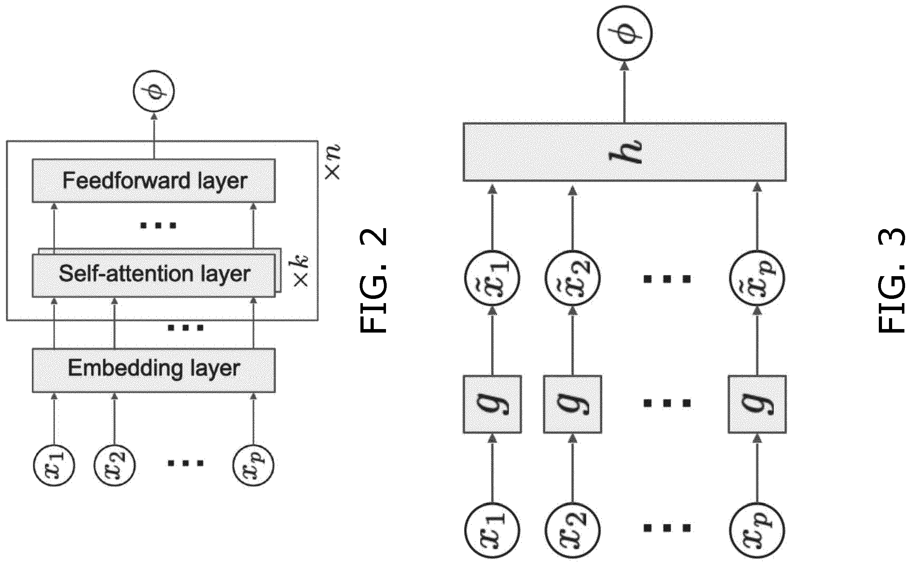

Figure 2 of the accompanying drawings shows a transformer unit according to an embodiment. In some examples, the encoder module 120 may include the transformer unit as shown. The input dataset 10 may be input into a first layer, called an embedding layer. The embedding layer may be configured to generate a plurality of embeddings based on the input dataset 10. The embeddings may be based on text included in one or more of the samples, text or class labels associated with one or more of the variables or text meta-data associated with the input dataset 10. Herein, the term *"embeddings"* refers to parts of the latent representation that contain low dimensional data based on the input dataset 10, where the input dataset 10 may be present in a raw (i.e. unprocessed) form. Notably, the embeddings are generated using the transformer. Thus, advantageously, generating the plurality of embeddings based on the input dataset 10 simplifies and removes noise from the input dataset 10 that is in the raw form and retrieves a true data from the input dataset 10.

The embeddings may be provided to one or more attention units. As shown, the transformer unit may include n attention units. Each attention unit may include one or more self-attention layers, followed by a feedforward layer. As shown, each attention unit may include k self-attention layers. The feedforward layer of the final attention unit may be configured to output the latent representation.

In some embodiments, the encoder module 120 may be implemented using a Kolmogorov-Arnold (KA) encoder as shown in Figure 3. The KA module may be configured to encode each variable xₚ individually to generate a plurality of column embeddings *x̃*ₚ. The plurality of column embeddings may be aggregated using a function h to generate the latent representation. The function h may be, for example, a sum function. In this way, the encoder module 120 implementing the KA encoder does not depend on a fixed number of variables. The resulting latent representation is invariant under column permutations and, for non-time series data, is invariant under row permutations. The latent representation can be described as smooth or stable, i.e. small perturbations lead to small perturbations of the embedding, and it is robust to outliers.

The decoder module 130 is configured to process the latent representation and indicate a link category 20 for each pair of variables. Optionally, the decoder module 130 may be implemented in a decoder. Optionally, the decoder is a device which may be coupled to the at least one processor 105 or may be coupled to a part of the at least one processor 105. Alternatively, the encoder may be a part of the at least one processor 105. Notably, to process the latent representation, the decoder module 130 determines relationships between variables in the latent representation and transforms them back into the larger dimensionality of the input dataset 10 using a statistical model, such as a neural network. The output is a link category between each pair of variables from the input dataset 10. In an implementation, to process the latent representation, the decoder the module 130 determines the influence of the latent variables Z1 and Z2 in predicting the latent variable Z3. For example, if the error in modelling Z3 due to the influence of Z1 and Z2 is same as the error in Z3 due to the influence of Z1, then Z2 has no influence on Z3. Therefore, Z2 has no information contribution to Z3. Subsequently, parameters of the decoder module 130 are modified to indicate the link category 20 for each pair of the variables in the input dataset 10. For example, the input dataset 10 has variables: X1, X2, X3, X4, and X5 and the latent representation only has latent variables: Z1, Z2, Z3. The encoder module 120 learns the mapping from X to Z, where Z is the latent representation.

The decoder module 130 then maps the latent representation Z into a link category 20 between each pair of variables in X. In the earlier example, Z2 was found to have no influence on Z3. From the encoder module 120, X3 and X4 contribute the most information to Z2 and X5 contributes the most information to Z3. The decoder module 130 leverages this knowledge to define the link category 20 between X3 and X5 and the link category 20 between X4 and X5. The link category 20 is selected from a set of categories including, but not limited to, 'no causal link', 'causally linked' and 'unknown'. In some examples, an output may specify the most likely / most appropriate category from the set of categories. In some examples, the decoder may additionally output a confidence value associated with the link category 20. Alternatively, in some examples, the decoder module 130 may output a probability value for each category, such that the sum of probabilities for all categories in the set of categories is equal to 1.

In some examples, the decoder module 130 may be configured to operate on the latent representation from any type of encoder module 120. In this way, a single type of decoder can generate link categories 20 for a variety of data types, by utilising an appropriate encoder module 120. In some examples, the decoder module 130 may include a spatial and/or temporal attention mechanism. Herein, while using the temporal attention mechanism, the decoder module 130 assumes that data points in the latent representation that occur in time instances near to a given datapoint of the latent representation have a greater effect on the given datapoint in comparison to the datapoints of the latent representation that occur in the time instances farther from the given datapoint. Moreover, a certain datapoint of the latent representation will not have any effect on another datapoint of the latent representation that occurs in a past time instance to the certain datapoint, i.e., the future cannot cause the past. Likewise, while using the spatial attention mechanism, the decoder module 130 assumes that the data points in the latent representation that are present in a physical space near to the given datapoint of the latent representation have the greater effect on the given datapoint in comparison to the datapoints of the latent representation that are present in the physical space farther from the given datapoint. Thus, advantageously, the decoder module 130 is able to determine which of the datapoints of the latent representation have a significantly greater effect on the given datapoint of the latent representation in comparison to the other datapoints of the latent representation.

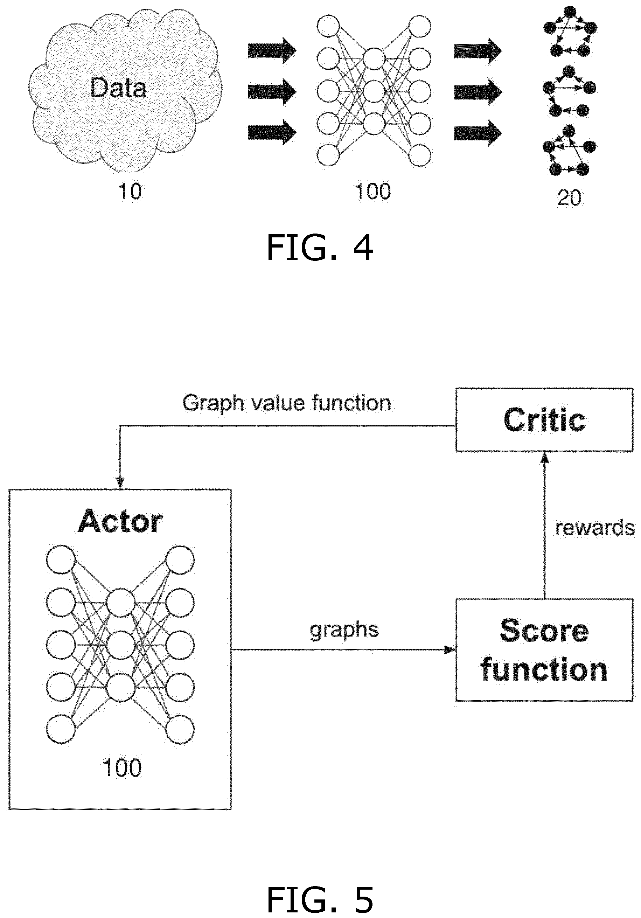

Figure 4 of the accompanying drawing shows the generation of causal links from an input dataset 10, according to an embodiment. The input dataset 10 is processed by the data processing apparatus 100 to generate a plurality of link categories 20.

As shown, in some embodiments, the at least one processor 105 may be further configured to use the plurality of link categories 20 to form a causal graph for the input dataset 10. The causal graph may be represented by a plurality of nodes, each representing a variable, and a plurality of edges connecting pairs of nodes, which represent the link categories 20 between pairs of variables. In some examples, edges with an arrow may indicate a causal link in one direction from a first variable to a second variable. In some examples, the absence of an edge may indicate no causal link between two variables.

In some embodiments, the set of categories may further include a pair of categories for each direction of causality between the pair of variables, a category indicating bi-directional causality between the pair of variables and a category indicating an undirected causal link. In some examples, a bi-directional causal link can indicate a hidden confounder between the pair of variables and an undirected causal link can indicate some existence of selection bias in the input dataset 10. Notably, presence of the hidden confounder indicates that the pair of variables does not have a direct causal link, but at least one unobserved variable may be influencing the measured association between the pair of variables, as all the variables acting on the system may not be observed in the data processing apparatus 100. Hence, the pair of variables are linked by the hidden confounder instead of having the direct causal link. For example, if the given pair of variables are number of ice creams sold and the number of shark attacks, the direct causal link may be indicated between the given pair of variables. However, there exists a hidden confounder of warm sunny weather between the given pair of variables. Thus, beneficially, the data processing apparatus 100 considers the influence of the unobserved variables while indicating the link category 20 for the pair of variables.

In some embodiments, the causal graph may be a directed acyclic graph (DAG), a partial ancestral graph (PAG), or a completed partially directed acyclic graph (CPDAG). Herein, the PAG and the CPDAG, are two different ways to encode a Markov Equivalence Class (MEC) of causal graphs. Thus, beneficially, while encoding the MEC, the data processing apparatus 100 is able to use a class of DAG's instead of a single DAG.

In some embodiments, the decoder module 130 may be further configured to output a set of causal graphs, where each graph in the set is Markov equivalent. That is, the graphs each belong to the Markov equivalence class, which expresses the set of graphs which are estimated to contain the same set of conditional independencies as the input dataset 10.

In some examples, one or more additional post-processing steps may be performed to reduce the set of causal graphs. Notably, as a large number of causal graphs belong to the same family of MEC, particularly when the number of variables is large, the set of causal graphs to be displayed to a user are to be reduced. For example, a further computational analysis may be performed, or one or more graphs may be excluded based on the user insight. In an implementation, the causal graphs with a high number of edges may be excluded, to only include the causal graphs that are sparser. In another implementation, a score function may be used to reduce the set of causal graphs (for example, a mean squared error between predicting a given node as a function of the parent nodes of the given node and observed values of the given node). In yet another implementation, heuristics may be used to reduce the set of causal graphs. Thus, advantageously, only the set of causal graphs that are relevant from a perspective of deducing inferences and information from the set of causal graphs are displayed to the user.

The reinforcement learning (RL) module 140 is configured to compare the link category 20 for each pair of variables with the samples of the associated variables in the input dataset 10. The RL module 140 is further configured to generate a score function including an error term based on a result of the comparison. Optionally, the RL module 140 may be implemented in the at least one processor 105. Optionally, if the at least one processor 105 comprises a plurality of processors, then the RL module 140 may be implemented in one or more processors from amongst the plurality of processors. Herein, comparison of the link category 20 for each pair of variables depends on the score function that is utilized. In an implementation, a simple independence test may be used by the RL module 140 to evaluate the link category 20. For example, to evaluate the link category 20 between the variables X and Y, the independence test such as one of: Pearson, Spearman, Kendall's Tau, mutual information, or Hilbert-Schmidt Independence Criterion (HSIC) test may be used by the RL module 140. In another implementation, a conditional independence test may be used by the RL module 140 to evaluate the link category 20. For example, to evaluate the link category 20 between the variables X and Y given another variable W, the conditional independence test such as one of: Partial Pearson, Partial Spearman, conditional mutual information, or conditional dependence coefficient (CODEC) may be used by the RL module 140. In another implementation, the RL module 140 predicts X using Y, and predicts Y using X, and results of the prediction are used to evaluate the link category 20 between the variables X and Y. However, multiple parent variables may be used to predict a given variable. This would be a goodness of fit type score function. The RL module 140 is further configured to update one or more parameters of the encoder module 120 and decoder module 130 based on the score function.

In this way, the data processing apparatus 100 can output a discovered causal graphical structure given an input dataset 10. For an input dataset 10 composed of samples from a set of variables with unknown generative structure, the data processing apparatus 100 can map the given dataset to a causal structure representation which describes the predicted causal mechanism relating the variables. In this way, the data processing apparatus 100 can provide knowledge of the underlying structure which can be used for robust prediction and recommendation in many areas of endeavour.

The data processing apparatus 100 uses reinforcement learning in order to more efficiently search the large space of possible causal graphs. In addition, the integration of neural network architectures with reinforcement learning can enable efficient search over highly compressed and flexible causal structure representations. Each causal graph can then be evaluated based on a pre-specified score function which is designed to reflect the causal discovery objective in the RL setting.

In this way, causal structures can be rapidly generated from a foundation model which is trained on a massive database, rather than deployed only in the context of a specific dataset.

Figure 5 of the accompanying drawings shows a process of network optimisation with reinforcement learning, according to an embodiment. The RL module 140 may implement an actor-critic reinforcement learning process which guides the search process for optimising the network.

Link categories 20, in some examples forming causal graphs, may be generated by the "actor" i.e. the encoder-decoder network. A score function may be generated for each graph, e.g. custom-designed score functions which determine the desired qualities of the output causal structures. In this way, the score function can measure the quality of a discovered causal graph according to the objectives of the user. In some examples, it may correspond to the degree to which the graph structure explains the observed data and satisfies the constraints of a causal graph.

For example, the score function may contain an error term reflecting the difference between observed variable values in the input dataset 10 and values predicted by the output causal model. More generally, the score function may incorporate human-defined constraints and/or prior knowledge regarding the causal structure.

In some embodiments, the score function may further include a sparsity term for the causal graph. For example, the score function may include a scalar graph penalty, which is large for densely connected graphs. In this way, the score function can incentivise simple graphs. In some examples, conditional independence tests may be run and combined into a single scalar and added to the score function. In this way, given the separation sets defined by the output, the score function can reflect whether a constraint-based method agrees with the proposed structure.

Based on the score function, the "critic" may estimate the value of a particular action, e.g. including assigning a certain link category 20 between two variables. This information may then be incorporated into the training process by being reflected in the updates to the encoder and/or decoder. In this way, the actor, i.e. the encoder-decoder network, can be trained to search the graph space in a more efficient way.

In some embodiments, the decoder module 130 may be further configured to generate each link category 20 sequentially. The RL module 140 may be further configured to generate the score function and update the parameters for each link category 20 sequentially. In this way, the data processing apparatus 100 can solve a sequential decision-making problem whereby each action corresponds to an additional link category 20 being generated.

In some embodiments, the at least one processor 105 may be further configured to execute the encoder module 120, the decoder module 130 and the RL module 140 in an iterative manner until a predefined end condition is reached. In some embodiments, the end condition may be a local minimum of the score function, and/or a predefined number of iterations. Notably, the score function is of a highly non-convex nature and hence, a global minimum of the score function is not easily discoverable. Thus, advantageously, using the local minimum of the score function as the end condition enables to use the score functions of highly non-convex nature.

In some examples, the input module 110 may receive one or more new samples for at least one of a plurality of variables. In some examples, the input module 110 may receive one or more additional variables with a plurality of assigned samples. In some embodiments, the at least one processor 105 may be configured to execute the encoder module 120, the decoder module 130, and the RL module 140 to perform at least one iteration in response to receiving the new samples and/or additional variables.

In this way, the data processing apparatus 100 can continuously integrate new data variables into the causal discovery process. A foundation model can be continually trained as more data becomes available. This can avoid the need for causal discovery to be re-deployed if a new data source becomes available. In addition, the score function allows the RL module 140 to predict the long-term benefit of each iterative parameter update prompted by new data.

In some embodiments, the input dataset 10 may further include one or more prior indications of link categories 20 between pairs of variables. The score function may be further based on a comparison of one or more output link categories 20 and the prior indications of link categories 20. The prior indication may include a single predefined link category 20 for one or more pairs of variables. Alternatively, the prior indication may include two or more possibilities for the link category 20. In some examples, a probability or weighting may be included with one or more of the possibilities provided. In this way, a user may pre-specify prior knowledge and constraints regarding the causal structure, e.g. based on their knowledge of the field.

In some embodiments, the encoder module 120 and/or decoder module 130 may be initialised using parameters generated from a second dataset different to the input dataset 10. In this way, a model can be pre-trained, in order to learn more efficiently when applied to the input dataset 10. In some examples, the second dataset may include data from a related field to the input dataset 10. In some embodiments, the initialisation of the model with a second dataset may constitute an application of Transfer Learning. In some examples, the second dataset may include a range of generic data. It will be appreciated that, the encoder module 120 and/or the decoder module 130 has a set of tuneable parameters, which are the weights and biases when using a neural network architecture. Notably, after the training of the model with the second dataset, the set of weights and biases of the encoder module 120 and/or the decoder module 130 are set to more accurate and precise values. Subsequently, the more accurate and precise values for the set of weights and biases are used to initialise the encoder module 120 and/or the decoder module 130 to achieve more precise and accurate results while working over the input dataset 10. Thus, advantageously, the data processing apparatus 100 is suitable to provide highly accurate and precise results for datasets that have highly similar characteristics (for example, macro-economic data).

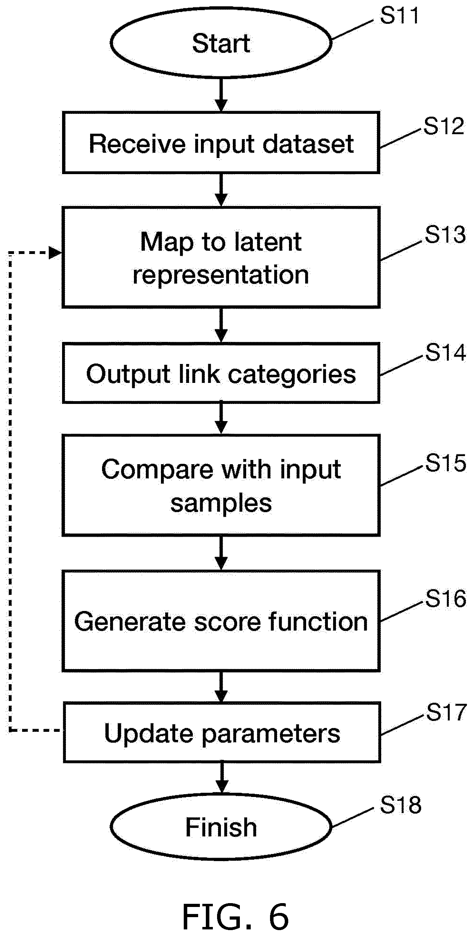

Figure 6 of the accompanying drawings shows a flowchart representing a data processing method according to an embodiment. The method starts at step S 11.

At step S 12, the method includes receiving, by an input module, an input dataset comprising a plurality of samples. Each of the samples is assigned to one of a plurality of variables. For example, one or more of the variables may include time-series data comprising a plurality of samples each associated with a time point. Alternatively, or in addition, the variables may include one or more independent and identically distributed (IID) variables. In some examples, the input dataset may include any number up to several thousand variables or more. In some examples, the input dataset may further include variables with text data points, and/or contextual information in the form of ontological variable labels.

In some examples, the input dataset may be a subset of a larger raw dataset, where the input dataset is generated by identifying one or more potentially useful variables in the raw dataset. In some examples, the input dataset, or the raw dataset, may be generated by 'crawling' one or more publicly or privately available data sources.

At step S 13, the method includes mapping the input dataset, by an encoder module, to a latent representation. In some examples, the latent representation may have a dimensionality lower than a dimensionality of the input dataset. The dimensionality of the input dataset may be, for example, a number of time points for the plurality of variables. The encoder may be configured to map a first vector representing each variable, where the first vector has a first dimensionality, to a second in a vector space having a second dimensionality lower than the first dimensionality.

At step S 14, the method includes processing the latent representation by a decoder module and outputting a link category for each pair of variables. The link category is selected from a set of categories including, but not limited to, 'no causal link', 'causally linked' and 'unknown'. In some examples, an output may specify the most likely / most appropriate category from the set of categories. In some examples, an output may additionally include a confidence value associated with the link category. Alternatively, in some examples, an output may include a probability value for each category, such that the sum of probabilities for all categories in the set of categories is equal to 1.

In some embodiments, the plurality of link categories may form a causal graph for the input dataset. The causal graph may be represented by a plurality of nodes, each representing a variable, and a plurality of edges connecting pairs of nodes, which represent the link categories between pairs of variables. In some examples, edges with an arrow may indicate a causal link in one direction from a first variable to a second variable. In some examples, the absence of an edge may indicate no causal link between two variables.

In some embodiments, the set of categories may further include a pair of categories for each direction of causality between the pair of variables, a category indicating bi-directional causality between the pair of variables and a category indicating an undirected causal link. In some examples, a bi-directional causal link can indicate a hidden confounder between the pair of variables and an undirected causal link can indicate some existence of selection bias in the input dataset.

In some embodiments, the causal graph may be a directed acyclic graph (DAG), a partial ancestral graph (PAG), or a completed partially directed acyclic graph (CPDAG).

In some embodiments, an output may include a set of causal graphs, where each graph in the set is Markov equivalent. That is, the graphs each belong to a Markov equivalence class, which expresses the set of graphs which are estimated to contain the same set of conditional independencies as the input dataset.

At step S15, the method includes comparing the link category for each pair of variables with the samples for the associated variables.

At step S 16, the method includes generating a score function including an error term based on a result of the comparison.

At step S17, the method includes updating the parameters of the encoder module and decoder module based on the score function.

In some embodiments, the steps S13 to S17 may be iterated until a predefined end condition is reached. In some embodiments, the end condition may be a local minimum of the score function, and/or a predefined number of iterations.

In this way, the method can output a discovered causal graphical structure given an input dataset. For an input dataset composed of samples from a set of variables with unknown generative structure, the method can map the given dataset to a causal structure representation which describes the predicted causal mechanism relating the variables. In this way, the method can provide knowledge of the underlying structure which can be used for robust prediction and recommendation in many areas of endeavour.

In this way, causal structures can be rapidly generated from a foundation model which is trained from a massive database, rather than deployed only in the context of a specific dataset.

The method uses reinforcement learning in order to more efficiently search the large space of possible causal graphs. In addition, the integration of neural network architectures with reinforcement learning can enable efficient search over highly compressed and flexible causal structure representations. Each causal graph can then be evaluated based on a pre-specified score function which is designed to reflect the causal discovery objective in the RL setting.

The method finishes step at S18.

Although aspects of the invention herein have been described with reference to particular embodiments, it is to be understood that these embodiments are merely illustrative of the principles and applications of the present invention. It is therefore to be understood that numerous modifications may be made to the illustrative embodiments and that other arrangements may be devised without departing from the scope of the invention as defined by the appended claims.

## Claims

1. A data processing apparatus, comprising:
at least one processor configured to execute:
an input module configured to receive an input dataset comprising a plurality of samples, each assigned to one of a plurality of variables;
an encoder module configured to map the input dataset to a latent representation;
a decoder module configured to process the latent representation and indicate a link category for each pair of variables, wherein the link category is selected from a set of categories including `no causal link', 'causally linked' and 'unknown' ;
a reinforcement learning, RL, module configured to:
compare the link category for each pair of variables with the samples for the associated variables,
generate a score function including an error term based on a result of the comparison, and
update one or more parameters of the encoder module and decoder module based on the score function.

2. The data processing apparatus of claim 1, wherein the at least one processor is further configured to use the plurality of link categories to form a causal graph for the input dataset.

3. The data processing apparatus of claim 2, wherein the score function further includes a sparsity term for the causal graph.

4. The data processing apparatus of claim 2 or claim 3, wherein the decoder module is further configured to output a set of causal graphs, where each graph in the set is a Markov equivalent.

5. The data processing apparatus of any one of claims 2 to 4, wherein the causal graph is a directed acyclic graph, DAG, a partial ancestral graph, PAG, or a completed partially directed acyclic graph, CPDAG.

6. The data processing apparatus of any preceding claim, wherein the input dataset further includes one or more prior indications of link categories between pairs of variables, and the score function is further based on a comparison of one or more output link categories and the prior indications of link categories.

7. The data processing apparatus of any preceding claim, wherein the at least one processor is further configured to execute the encoder module, the decoder module and the RL module in an iterative manner until a predefined end condition is reached.

8. The data processing apparatus of claim 7, wherein the end condition is a local minimum of the score function, and/or a predefined number of iterations.

9. The data processing apparatus of claim 7 or claim 8, wherein the at least one processor is further configured to execute the encoder module, the decoder module, and the RL module to perform at least one iteration in response to receiving, at the input module, one or more new samples for at least one of a plurality of variables and/or an additional variable with a plurality of assigned samples.

10. The data processing apparatus of any preceding claim, wherein the decoder module is further configured to generate each link category sequentially and the RL module is further configured to generate the score function and update the parameters for each link category sequentially.

11. The data processing apparatus of any preceding claim, wherein the encoder module and/or decoder module are initialised using parameters generated from a second dataset different to the input dataset.

12. The data processing apparatus of any preceding claim, wherein the encoder module includes a transformer unit configured to generate embeddings based on text included in one or more of the samples, text labels associated with one or more of the variables or text meta-data associated with the input dataset.

13. The data processing apparatus of any preceding claim, wherein the set of categories further includes a pair of categories for each direction of causality between the pair of variables, a category indicating bi-directional causality between the pair of variables and a category indicating an undirected causal link.

14. A data processing method comprising:
receiving, by an input module, an input dataset comprising a plurality of samples, each assigned to one of a plurality of variables;
mapping the input dataset, by an encoder module, to a latent representation;
processing the latent representation by a decoder module and outputting a link category for each pair of variables, wherein the link category is selected from a set of categories including `no causal link', 'causally linked' and 'unknown';
updating, by a reinforcement learning, RL, module, one or more parameters of the encoder module and decoder module, by:
comparing the link category for each pair of variables with the samples for the associated variables,
generating a score function including an error term based on a result of the comparison, and
updating the parameters of the encoder module and decoder module based on the score function.

15. A computer readable medium comprising instructions which, when executed by a processor, cause the processor to perform the method of claim 14.
